# EUROPEAN PATENT APPLICATION

(11) **EP 1 035 746 A1**
(43) Date of publication of application: **13.09.2000**
(21) Application number: 99107646.4
(22) Date of filing: 16.04.1999
(51) Int. Cl.: H04Q 7/38, H04Q 7/32

(54) **Portable terminal for protecting a predetermined area by means of a separate protection system**

(30) Priority: 12.03.1999 WO PCT/EP99/01644
(71) Applicant: Sony International (Europe) GmbH, 50829 Köln (DE)
(72) Inventor: Winkler, Gregor c/oSony International (Europe)GmbH, 85609 Aschheim (DE); Chummun, Ferial c/oSony International (Europe)GmbH, 85609 Aschheim (DE); Ott, Stefan c/o Sony International (Europe) GmbH, 85609 Aschheim (DE)
(74) Representative: Körber, Martin, Dipl.-Phys.

(57) **Abstract**

The present invention relates to a mobile terminal for a wireless telecommunication system and a method for controlling the mobile terminal for protecting a predetermined area from disturbing usage of the mobile terminal. The mobile terminal (300) according to the present invention comprises transmitting and receiving means (320) for transmitting and receiving signals of the wireless telecommunication system, detecting means (310) for detecting protection signals of a wireless protection system different from the wireless telecommunication system for protecting a predetermined area from disturbing usage of the mobile terminal (300), and control means (321) for changing a mode of the mobile terminal into a protection mode depending on a detected protection signal from the detecting means (310) to protect said predetermined area. By separating the functions of the wireless telecommunication system and the functions of the wireless protection system in the mobile terminal according to the present invention, the mobile terminal (300) can still be remotely controlled on the basis of the wireless protection system although the functions or part of the functions of the wireless telecommunication system are disabled in order to protect the predetermined area.

## Description

The present invention relates to a mobile terminal for a wireless cellular telecommunication system for protecting a predetermined area from disturbing usage of this mobile terminal and to a method for protecting a predetermined area from disturbing usage of mobile terminals of a wireless cellular telecommunication system.

In many areas the use of mobile terminals of wireless telecommunication systems is regarded as a nuisance for other people, like in restaurants or in the opera, or even dangerous in places like hospitals or airplanes. In the first case particularly audible signals output from mobile terminals are disturbing other people or the spectacle being given. In the second case, the use of mobile terminals, particularly the transmission of high frequency electromagnetic waves, can disturb other electronic devices or the like by interfering with their circuitry what can lead to severe incidents. It is therefore very important to provide a way to protect predetermined areas from a disturbing usage of mobile terminals within these areas. Particularly, the protection of a predetermined area should not depend on the user's will, e. g. on a user's input of information to the mobile terminal.

EP 0 891 110 A1 discloses a method and a system for preventing a mobile terminal from causing disturbance within a predetermined area, e. g. inside a plane or inside of hospitals. Particularly, the disclosed method comprises the steps of transmitting a deactivation signal from a base station to a mobile terminal and deactivating a use of the output of the mobile terminal in response to the deactivation signal. Thereby, the transmission output is deactivated. The base terminal can either be an ordinary base station or a base station specifically designed for mainly transmitting the deactivation signal. Although EP 0 891 110 A1 describes that the base station could be a specifically designed base station, it is not disclosed how the deactivation signals could be implemented and transmitted in an ordinary telecommunication system or how a mobile terminal can be implemented, to protect such an area from disturbing usage of mobile phones of different mobile networks.

The object of the present invention is therefore to provide a mobile terminal and a method for protecting a predetermined area from disturbing usage of this mobile terminal of a wireless cellular telecommunication system, which protects a predetermined area by transmitting mode change information for changing an operation mode of the mobile terminals in a simple and effective way.

The above object is achieved by a mobile terminal for a wireless telecommunication system, with transmitting and receiving means for transmitting and receiving signals of the wireless telecommunication system, detecting means for detecting protection signals of a wireless protection system different from said wireless telecommunication system, and control means for changing a mode of the portable terminal into a protection mode depending on a detected protection signal from said detecting means, so that a predetermined area is protected from disturbing usage of the mobile terminal.

The above object is further achieved by a method for controlling a mobile terminal for a wireless telecommunication system, said mobile terminal comprising transmitting and receiving means for transmitting and receiving signals of the wireless telecommunication system, comprising the steps of detecting protection signals of a wireless protection system different from said wireless telecommunication system, and changing a mode of the portable terminal into a protection mode depending on a detected protection signal, so that a predetermined area is protected from disturbing usage of said mobile terminal.

Separating the function of detection protection signals from performing functions for the wireless telecommunication system allows to completely disable function blocks for the wireless telecommunication system, thereby eliminating any associated power consumption and undesirable or dangerous interference to other services or devices in the area to be protected. Nevertheless, each mobile terminal can be switched back into normal mode automatically after leaving the protected area. The shape and size of the area protected by such protection method can therefore be determined and chosen independently from the conditions that apply to the wireless telecommunication system. This can be achieved by choosing the transmission method for said protection signals so that their range is determined by the propagation and obstacle penetration characteristics of said protection signals and / or by applying navigation methods to determine the geographic position of the mobile terminal such as triangulation or path delay information carried by or determined from said protection signal.

Using a short wavelength (typically decimeters or less) for said protection signal allows to plan / predetermine the range and intended absorption in obstacles to limit the range. Natural propagation of RF waves causes a path attenuation which is proportional to 4π/λ*d², where d is the distance between transmitter and receiver and λ is the wavelength used. Typical home or office environments create even larger wave attenuation typically proportional to 4π/λ*d³ above a distance of about 10 meters.

Advantageously, said control means of said mobile terminal maintains the protection mode as long as the detecting means detects said protection signals of said wireless protection system.

This will ensure that an area around a protection signal transmitter is protected against the disturbing use of such mobile terminals just as long as the protection signal is recognized. The transmitter transmitting the protection signals can be a device operating solely in the wireless protection system or can have additional functional features.

Advantageously, said control means of the mobile terminal changes the mode of the mobile terminal back from the protection mode to the original mode upon determining that the time elapsed since the last reception of a protection signal of said wireless shield system exceeds a predetermined time threshold.

This will ensure that an area around the protection signal transmitter remains protected for a fixed amount of time against the disturbing use of such mobile terminals even in the case that the protection signal were not continuously transmitted by the protection signal transmitter or continuously recognized by the protection signal detector in such mobile terminals.

This will also ensure that areas which can not be equipped (for interference reasons) with continuously transmitting protection signal transmitters (e.g. airplanes) can be protected against the disturbing use of such mobile terminals if the user of the mobile terminal has previously passed by an area protected by such protection signal transmitters.

This will further ensure that areas that can only be equipped with low duty cycle protection signal transmitters (e.g. battery, rechargeable or solar powered) can be protected against the disturbing use of such mobile terminals if the user of the mobile terminal has previously passed by an area protected by such shield transmitters.

Advantageously, said control means of said mobile terminal maintains said protection mode until a time period received as time information with said protection signals has expired, whereby the mobile terminal is reset to the original mode thereafter.

This will ensure that an area around the protection signal transmitter remains protected, for an amount of time which is determined by the protection signal transmitter, against the disturbing use of such mobile terminals even in the case that the protection signals were not continuously transmitted by the protection signal transmitter or continuously recognized by the detector in such mobile terminals. The transmitted time information could e.g. indicate the expected flight duration plus an optional safety margin.

This will also ensure that areas which can not be equipped with continuously transmitting protection signal transmitters (e.g. airplanes) can be protected against the disturbing use of such mobile terminals if the user of the mobile terminal has previously passed by an area protected by such protection signal transmitters.

This will further ensure that areas that can only be equipped with low duty cycle shield transmitters (e.g. battery, rechargeable or solar powered) can be protected against the disturbing use of such mobile terminals if the user of the mobile terminal has previously passed by an area protected by such protection signal transmitters.

Advantageously, in said protection mode at least a high frequency portion of the transmitting and receiving means of said mobile telecommunication system is switched off. This is particularly advantageous in sensible environments, like airplanes, nuclear plants etc. As soon as the mobile terminal detects the protection signals, it immediately switches off at least its high frequency portion to avoid interference with electronic facilities in the area. Further, in this case even incoming or outgoing emergency calls may be disabled for the simple reason that in such sensible vicinities, a personal emergency call can disrupt the well-being of the entire area.

This will eliminate any associated power consumption and undesirable or dangerous interference to other services or devices in the area to be protected.

Advantageously, in said protection mode of said mobile terminal only portions of the mobile terminal relating to the wireless telecommunication system, but not portions of the mobile terminal relating to the wireless shield system are switched off.

This allows continuous detection and monitoring of any information obtainable from the wireless protection system.

Advantageously, said protection mode of the mobile terminal is a silence mode in which the volume of audible output signals of the mobile terminal is lowered.

This possibility is particularly advantageous in places like operas, restaurants etc., in which many people are close together, but don't want to be disturbed by each others portable terminal.

This will avoid any objectionable nuisance to persons not concerned with said mobile terminal.

Advantageously, said protection mode of the mobile terminal is a silence mode in which audible output signals of the mobile terminal are suppressed.

This will avoid any conceivable nuisance to persons not concerned with said mobile terminal.

Advantageously, said suppressed output signals of the mobile terminal are replaced by visual or other non audible signals.

This will ensure that said mobile terminal for said wireless telecommunication system will retain normal functionality for the user concerned.

The present invention ensures that said mobile terminal for a wireless telecommunication system will abide to the restrictions imposed and transmitted by said wireless protection system.

The present invention will be explained in more detail in the following description by means of preferred embodiments relating to the enclosed drawings, in which
figure 1 shows a typical application scenario employing the present invention,
figure 2 shows a base station for transmitting protection signals according to the present invention, and
figure 3 shows a mobile terminal for a wireless telecommunication system and for detecting protection signals of a wireless protection system according to the present invention.

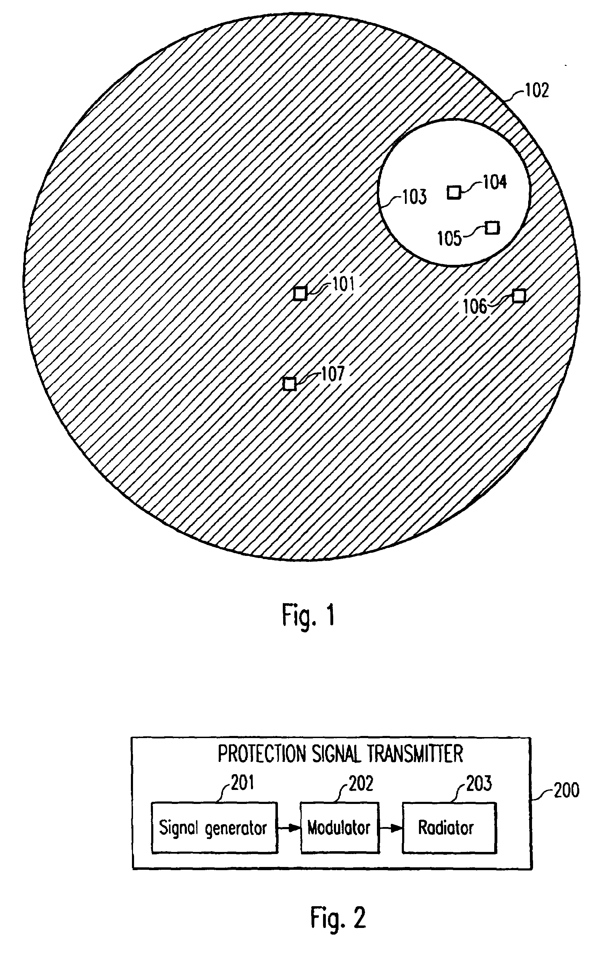

Figure 1 shows a base station 101 of a normal telecommunication system having a transmitting and receiving range indicated by the circle 102. The base station 101 of the wireless telecommunication system transmits and receives signals to and from mobile terminals of the wireless telecommunication system within the range limited by the circle 102. E. g. the mobile terminals 105, 106 and 107 located within the range 102 are able to communicate with the base station 101 on the basis of the wireless telecommunication system, e. g. the GSM system. Within the range of the base station 101, a protection area is located, the range of which is indicated by the circle 103. This protection area 103 can e. g. be the area of a hospital or the like. The mobile terminal 105 is located within the range of the protection signal transmitter 104, which transmits protection signals of a wireless protection system different from the wireless telecommunication system used by the base station 101. The mobile terminal 105 is a mobile terminal according to the present invention and is therefore able to receive the protection signals from the protection signal transmitter 104. Upon detecting such a protection signal from the protection signal transmitter 104, the normal terminal 105 switches itself into a protection mode depending on the detected protection signal so that the protection area, i. e. the transmission range 103 of the protection signal transmitter 104 is protected from disturbing usage of the mobile terminal.

Figure 2 shows a protection signal transmitter or a base station for transmitting protection signals 200 according to the present invention. The protection signal transmitter 200 comprises a generating means 201 for generating the protection signals. The generated protection signals are supplied to a modulating means 202, which modulates the protection signals and supplies the modulated protection signals to a radiating or transmitting means 203, which transmits the protection signals on the basis of the wireless protection system within the range of the protection area, as e. g. the range 103 shown in figure 1.

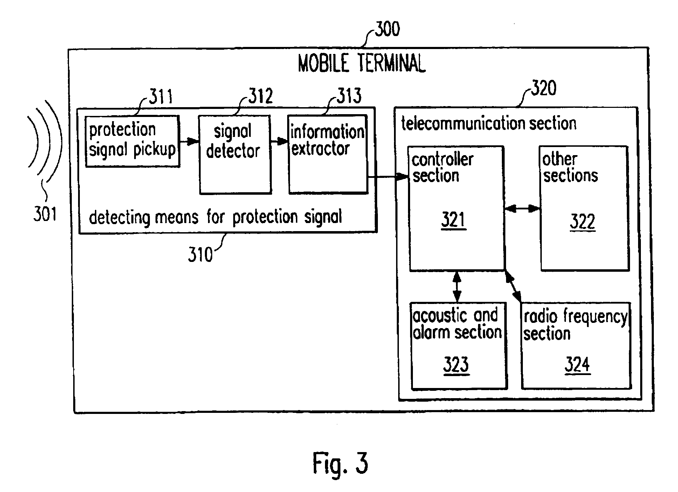

Figure 3 shows a mobile terminal 300 for a wireless telecommunication system according to the present invention. The mobile terminal 300 comprises a protection signal detecting section 310 for detecting protection signals, as e. g. transmitted from a protection signal transmitter 200 shown in figure 2, and changing the mode of the mobile terminal 300 into a protection mode, and further a telecommunication section 320 for communicating with the normal base station, as e. g. the base station 101 shown in figure 1, of a wireless telecommunication system different from the wireless protection system.

The protection signal detecting means 310 of the mobile terminal 300 comprises a pickup means 311 for picking up protection signals 301, i. e. the radiated protection signal energy, and supplies the picked up protection signal to a protection signal detecting means 312 for detecting and demodulating the picked up protection signals. The demodulated protection signals are supplied to an information extracting means 313, which recognizes relevant protection signals for the respective mobile terminal, e. g. the mobile terminal 300, and supplies the extracted information to a controlling section 321 of the telecommunication section 320. The controlling section 321 controls the changement of the mode of the mobile terminal 300 into the protection mode according to the present invention. Thereby, the controlling section 321 controls an acoustic and alarm section 323 to output a warning signal to the user that a mode changement into a protection mode is performed. Further, the controlling section 321 controls a radio frequency section 324 for switching off at least the radio frequency parts of the mobile terminal 300. The telecommunication section 320 of the mobile terminal 300 further comprises other sections 322 for operating the mobile terminal 300 in the wireless telecommunication system, i. e. for communicating data e. g. with a normal base station of the telecommunication system within non-protected areas.

The controlling section 321 can maintain the protection mode as long as the detecting means 310 detects protection signals of the wireless protection system. Further, the controlling section 321 can change the mode of the mobile terminal 300 back from the protection mode to the original mode upon determining that a predetermined time elapsed since the last reception of a protection signal by the pick-up means 311.

Alternatively, the controlling section 321 can maintain the protection mode of the mobile terminal 300 until a time period received as time information with the protection signal has expired, whereby the mobile terminal 300 is reset to the original mode thereafter. This implies, that the protection signal transmitter, as e. g. the protection signal transmitter 200, further generates a timing signal which is transmitted with the protection signals.

The controlling section 321, upon detection of a protection signal by the detecting means 310, controls the radio frequency section 324 to switch off at least the high frequency portion of the telecommunication section 320 of the mobile terminal 300. Thereby, in the protection mode only portions of the mobile terminal 300 relating to the wireless telecommunication system but not portions of the mobile terminal 300 relating to the wireless protection system, e. g. the detecting means 310, are switched off.

Depending on the protection level to be achieved, which might be different for different areas, e. g. hospitals, airplanes or restaurants, the protection mode of the mobile terminal 300 may also be a silence mode in which the volume of audible output signals of the mobile terminal 300 is lowered or in which the audible output signals are completely suppressed. In this case, the controlling section 321 controls the acoustic and alarm section 323 to suppress or at least lower audio output signals of the mobile terminal 300. Further, the controlling section 321 may in this case replace the suppressed audible output signals by visual or other non-audible signals.

In sensible areas, e. g. hospitals, airplanes, nuclear plants etc., the base station or protection signal transmitter 200 of the present invention, as e. g. shown in figure 2, can further comprise security means for preventing any mishandling and misuse. E. g., the protection signal transmitter 200 can comprise a movement detection means for detecting movements of the protection signal transmitter 200, whereby the movement detection means causes a switching off of the protection signal transmitter upon detection of a movement. In this case, protection against theft and misuse is ensured. Further, the protection signal transmitter 200 might comprise an input means for inputting a security code to be input to switch on the protection signal transmitter 200.

In less sensitive areas, as e. g. restaurants or theaters, in which the protection signal transmitter 200 transmits protection signals for switching off or at least lowering audible signals output from mobile terminals within the predetermined area, might also comprise security means for preventing any mishandling and misuse as explained above.

In the following, possible technical implementations of the wireless telecommunication system as well as for the wireless protection system according to the present invention are described, whereby in any case different systems have to be used for the wireless telecommunication system and the wireless protection system according to the present invention, so that interferences between the two systems are avoided. The wireless telecommunication system and the wireless protection system can be based on the following principles:

Time Division Multiple Access (TDMA). Example implementations of cellular systems based on this principle are the ETSI Standard GSM, as described in Chapters 3-11 of "An Introduction to GSM" from Redl, Weber, Oliphant, Artech House, 1995; The Standards NADC, IS-54, IS-136, as described in Chapter 12 of this book; and RCR/ARIB PDC. Examples of cordless systems based on this principle are standardized as ETSI DECT, RCR/ARIB PHS, EIA PWT, and Bluetooth.

CDMA (Code Division Multiple Access), e.g. EIA/TIA IS-95, EIA/TIA IS-95A, EIA/TIA IS-95B, as described in Chapter 13 of "An Introduction to GSM" as mentioned above.

TD-CDMA (Time Division-Code Division Multiple Access).

Analog continuous-time transmission methods such as AM, FM, SSB.

Compressed time / time-slot versions of systems based on analog transmission methods.

Broadcast systems (FM, AM, COFDM, e.g. DAB).

Pager systems (POCSAG).

Optical/Infrared systems.

Acoustic/Ultrasonic systems.

Hereafter some advantageous types of implementations of transmission methods for the wireless protection system of the present invention are considered.

It is suggested to use a short wavelength (decimeters and less) to determine a short range of protection around a station, which is transmitting protection signals of a wireless protection system. Absorption in obstacles can be planned as desired. Natural propagation of RF waves causes a path attenuation which is proportional to 4π/λ*d², where d is the distance between transmitter and receiver and λ is the wavelength used. Typical home or office environments create even larger wave attenuation typically proportional to 4π/λ*d³ above a distance of about 10 meters.

Different possible implementations of the protection system have each specific characteristics, advantages and disadvantages.

Radio frequency systems, i.e. systems, which use radio frequency protection signals, yield a good coverage range per transmitted power. A long range is therefore possible, depending on selected transmit power, receiver sensitivity, wavelength, and anticipated interference. An omni-directional radiator can be implemented easily in the protection signal transmitter, resulting in almost circular or spherical ranges. Radio frequency waves pass through some obstacles and encounter inflection, depending on the selected wavelength, therefore a line of sight between transmitter and receiver is usually not required. As an example, the protection system could be implemented using Bluetooth as the basic standard.

Optical systems typically have a short range per transmitted power. Radiators are usually directional such as in the case of an LED. Some gain in range or transmit power reduction can be achieved by concentration of radiation. Omni-directional radiators are big and heavy. Scattering can remove the restrictions of directional radiators at the expense of transmit power. Optical systems can be implemented in a cost efficient way. Particularly transmitters can be very cheap. System approval can be obtained easily. Radiation does not pass through most of the common obstacles such as walls or furniture. That could be a desired feature. A line of sight path between transmitter and receiver is usually required. Optical systems generate few interference to other devices or services. Few health considerations arise from their use.
As an example, the protection system could be implemented using infrared technology e.g. from home appliance remote controls as the basic standard.

Acoustic systems typically have a short to medium range. The required transmit power per range obtained is rather high. Typical systems have a directional radiator such as a piezoelectric speaker. Acoustic waves are scattered, inflected and reflected by most of the usual objects in home or office environments, therefore a line of sight between transmitter and receiver is usually not required. Radiation does not pass through most of the common obstacles such as walls, windows, furniture. System approval can be obtained easily. Acoustic systems generate few interference to other devices or services and only few health considerations arise from their use.
As an example, the protection system could be implemented using ultrasonic technology e.g. from home appliance remote controls as the basic standard.

As a preferred example, the protection system could be implemented using radio frequency technology based on "Bluetooth".
Bluetooth is a standard which is currently still under development. Bluetooth supports wireless ad-hoc voice and data connectivity. Bluetooth is a TDMA/TDD/FHSS system that operates in the unlicensed 2.4GHz ISM band, frequencies for its operation have been allocated worldwide. A range of 10 meters or even 100 meters (using higher transmit power) can be achieved. No line-of-sight is necessary for a successful communication.
Due to features like worldwide ad-hoc connectivity, low power, small size and ease of integration, Bluetooth is very well suited to the requirements of a protection system according to this invention. A Bluetooth subsystem can be implemented on a single silicon chip. A Bluetooth subsystem can also be integrated into existing chip designs.

## Claims

1. Mobile terminal (300) for a wireless telecommunication system, with transmitting and receiving means (320) for transmitting and receiving signals of the wireless telecommunication system,
detecting means (310) for detecting protection signals of a wireless protection system different from said wireless telecommunication system for protecting a predetermined area from disturbing usage of the mobile terminal, and
control means (321) for changing a mode of the mobile terminal into a protection mode depending on a detected protection signal from said detecting means (310) to protect said predetermined area.

2. Mobile terminal (300) for a wireless telecommunication system according to claim 1,
**characterized in,**
that said control means (321) maintains the protection mode as long as the detecting means detects said protection signals of said wireless protection system.

3. Mobile terminal (300) for a wireless telecommunication system according to claim 1 or 2,
**characterized in,**
that said control means (321) changes the mode of the mobile terminal back from the protection mode to the original mode upon determining that the time elapsed since the last reception of a protection signal of said wireless shield system exceeds a predetermined time threshold.

4. Mobile terminal (300) for a wireless telecommunication system according to claim 1,
**characterized in,**
that said control means (321) maintains said protection mode until a time period received as time information with said protection signals has expired, whereby the mobile terminal is reset to the original mode thereafter.

5. Mobile terminal (300) for a wireless telecommunication system according to one of the claims 1 to 4,
**characterized in,**
that in said protection mode at least a high frequency portion (324) of said transmitting and receiving means is switched off.

6. Mobile terminal (300) for a wireless telecommunication system according to claim 5,
**characterized in,**
that in said protection mode only portions of the mobile terminal relating to the wireless telecommunication system but not portions of the mobile terminal relating to the wireless protection system are switched off.

7. Mobile terminal (300) for a wireless telecommunication system according to one of the claims 1 to 4,
**characterized in,**
that said protection mode of the mobile terminal is a silence mode in which the volume off audible output signals of the mobile terminal is lowered.

8. Mobile terminal (300) for a wireless telecommunication system according to claim 7,
**characterized in,**
that said protection mode of the mobile terminal is a silence mode in which audible output signals of the mobile terminal are suppressed.

9. Mobile terminal (300) for a wireless telecommunication system according to claim 8,
**characterized in,**
that said suppressed output signals of the mobile terminal are replaced by visual or other non audible signals.

10. Method for controlling a mobile terminal for a wireless telecommunication system, said mobile terminal comprising transmitting and receiving means for transmitting and receiving signals of the wireless telecommunication system,
comprising the steps of
detecting protection signals of a wireless protection system different from said wireless telecommunication system, and
changing a mode of the mobile terminal into a protection mode depending on a detected protection signal for protecting a predetermined area from disturbing usage of the mobile terminal.

11. Method for controlling a mobile terminal for a wireless telecommunication system according to claim 10,
**characterized in,**
that the protection mode is maintained as long as said protection signals of said wireless protection system are detected.

12. Method for controlling a mobile terminal for a wireless telecommunication system according to claim 10 or 11,
**characterized in,**
that the mode of the mobile terminal is changed back from the protection mode to the original mode upon determining that the time elapsed since the last reception of a protection signal of said wireless shield system exceeds a predetermined time threshold.

13. Method for controlling a mobile terminal for a wireless telecommunication system according to claim 10 or 11,
**characterized in,**
that said protection mode is maintained until a time period received as time information with said protection signal has expired, whereby the mobile terminal is reset to the original mode thereafter.

14. Method for controlling a mobile terminal for a wireless telecommunication system according to one of the claims 10 to 13,
**characterized in,**
that in said protection mode at least a high frequency portion of said transmitting and receiving means is switched off.

15. Method for controlling a mobile terminal for a wireless telecommunication system according to claim 14,
**characterized in,**
that in said protection mode only portions of the mobile terminal relating to the wireless telecommunication system but not portions of the mobile terminal relating to the wireless shield system are switched of.

16. Method for controlling a mobile terminal for a wireless telecommunication system according to one of the claims 10 to 13,
**characterized in,**
that said protection mode of the mobile terminal is a silence mode in which the volume of audible output signals of the mobile terminal is lowered.

17. Method for controlling a mobile terminal for a wireless telecommunication system according to claim 16,
**characterized in,**
that said protection mode of the mobile terminal is a silence mode in which audible output signals of the mobile terminal are suppressed.

18. Method for controlling a mobile terminal for a wireless telecommunication system according to claim 17,
**characterized in,**
that said suppressed output signals of the mobile terminal are replaced by visual or other non audible signals.
